# EUROPEAN PATENT APPLICATION

(11) **EP 1 152 578 A1**
(43) Date of publication of application: **07.11.2001**
(21) Application number: 00810751.8
(22) Date of filing: 23.08.2000
(51) Int. Cl.: H04L 29/06, G06F 17/60, G06F 17/30

(54) **Method of exchanging information between a server and user computers**

(71) Applicant: Pop Coins AG, 63303 Dreieich (DE)
(72) Inventor: The designation of the inventor has not yet been filed
(74) Representative: Frei, Alexandra Sarah

(57) **Abstract**

The method is essentially characterised in that, upon request by a user computer, an item having an individual ID is sent to the user computer and an item element is displayed on an essentially transparent display layer on the display means of the user computer, providing the possibility for the user to cause a user induced event. If the user induced event has been caused, an event information is entered into a state data set. Depending on the state data contained in this set, state data may then be transmitted from the user to the server such as, e.g. the number of user induced events caused in connection with a certain kind of items. Depending on the state data, the server can then cause further user specific effects.

## Description

The invention refers to a method, a system, a computer program, a computer, and a data processing program according to the preambles of the independent claims.

Despite the interactive possibilities of the internet, web information according to the state of the art, such as, e.g., advertising is rather one dimensional. In analogy to the printed press, information is placed at specific positions on websites. Interactivity is merely given by the fact that the user can get access to a specific information or advertisement page by clicking on a link. Further developments for advertising purposes include a fast moving object on a certain reserved area of the page and created by a sequence of images leading to an animated picture. If the object can be "caught" by clicking on it, a different page opens and the user may be entitled to a certain prize the nature of which may be related to the advertised product. One of the drawbacks of this method is that the advertisement of a customer, like conventional banner ads, has to be placed on the webpage by the provider. It therefore requires an alteration of the webpage, and the ad has to be programmed in the programming environment of the webpage. Placing of one ad on different webpages, therefore includes adapting the ad to the whole variety of different environments. Also, with this method no individual addressing to a user is possible.

In the context of this text, "customers" are companies or maybe individuals using the internet and especially the method according to the invention to advertise and "users" are individuals or company representatives using the world wide web or other internet services for any purpose and acting as recipients of information, as participants in campaigns and as persons entitled to a prize or the like. Also, "computers" are in this context, any devices having data processing means and display means and having communication means for gaining access to the world wide web.

It would be desirable to have a method of placing specific information on the display of a chosen user computer, and of an interactive communication following thereon.

It is, therefore, the objective of the invention to provide a method overcoming drawbacks of the existing methods and especially providing interactive possibilities.

This objective is achieved by a method according to claim 1. The invention also comprises a system, a computer program, a computer and a data processing product according to the further independent claims. Preferred embodiments of the invention are defined in the dependent claims.

The method is essentially characterised in that, upon request by a user computer, an item having an individual ID is sent to the user computer and an item element is displayed on an essentially transparent display layer on the display means of the user computer, providing the possibility for the user to cause a user induced event. If the user induced event has been caused, an event information is entered into a state data set. Depending on the state data contained in this set, state data may then be transmitted from the user to the server such as, e.g. the number of user induced events caused in connection with a certain kind of items. Depending on the state data, the server can then cause further user specific effects.

The invention allows to introduce a possibility to launch information campaigns and especially advertisement campaigns which are attractive for the individual user and which, therefore may also enhance traffic of a specific customer website. For this purpose, the item elements may be requested by the computer program installed on a user computer if the user is linked to a certain (e.g. customer-) website only. Additionally, the invention allows a customer server computer to be provided with an active role in the interactive communication process. A customer server may e.g. take over part of the server function (and thus be part of the server according to the invention) and, as an example create item elements actively and send them to users from which a request signal has been received. The item elements may be icons containing a logo of the customer. If a certain number of user induced events have been caused and registered in a state data set, a user may be entitled to participate in an online sweepstake by a customer. However, since preferably one central server creates the item, an additional sweepstake or the like may be carried out, independent from the customer and therefore even enhancing to the user the attractivity of participating in any campaign.

The items which can be "collected" are provided with an individual icon ID. This opens up new possibilities in information exchange, and especially in campaigning. As an example, items can be exchanged between users, and can, authorised by the customer, possibly be exchanged between different campaigns or even sold. This can in principle lead as far as using concepts such as "cybercash" (or "digicash").

Since the displaying of the item information, e.g. the rendering of the icon is carried out in a transparent display layer provided on top of the rendering layer of a browser display area, browser functionality does not have to be altered. The display area does not have to be modified in order to display the advertisement information.

In the following, preferred embodiments of the invention are described with reference to drawings. In the drawings:
- Figure 1 depicts a schematic diagram showing some elements of a system for exchanging information between a server and a user computer and
- Figure 2 shows a schematic view of a display of a user computer.

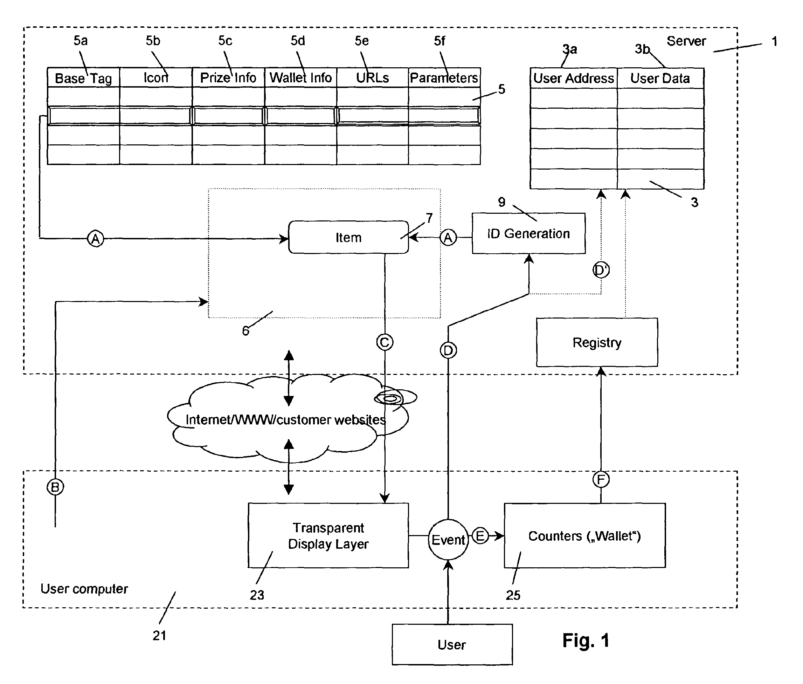

In **Figure 1,** the server is symbolised by a dashed box 1. It is provided on a computer having an operating system which is connected to the internet, i.e. which has communication means for communication with other computers of a computer network. It must be noted, that of course, though in the present description the server is represented as one unit, it need not be physically one single computer. It may even be advantageous to have at least three server computers, namely one FTP server from which software tools such as the plug-in can be downloaded, a www-server for providing general information and a database server on which the databases are provided and which creates the items.

The server contains a first database, namely a customer database 5 containing data of subscribed customers, e.g. companies. A base tag 5a, which may comprise the company name and/or a campaign number or the like, serves as key information. The customer database 5 also contains information 5b on an item to be created (icon), including a graphic representation of the item and possibly animation parameters. Further, information on possibilities for a participating user ("prize information") 5c, and information on a graphic representation of state data ("wallet information") 5d may be present. Parameters 5f determine the number of icons to be generated and the generation frequency, possibly dependent on circumstances such as daytime and/or on user information. The user database 5 also contains possible target websites 5e of the items, i.e. information on the websites they can be sent to ("URLs"). Such possible destinations may include customer websites or other websites.

The server further comprises means for generating items 7 using the customer database 5, wherein means 9 for generating a unique ID for every item are present. Such an ID may be an item serial number. An item stack 6 is a - permanently actualised - list of created items including their ID.

The server may further comprise a second database, namely a user database 3, in which a user address information 3a such as a user IP address serves as key information. Alternatively, also other data uniquely characterising a user may serve as key information. Further, it contains user data 3d, such as the user's' e-mail- and postal address, etc.

A user data processing system, in this text called user computer and symbolised in Fig. 1 by another dashed box 21, may be any device having data storage and data processing means, display means and means for exchanging information with a further device. Specifically, it may be a computer or a computer terminal connected to a computer network, a mobile phone or another handheld or wireless device able to communicate by the internet.

The user computer 21 comprises an operating system, a memory and a display means such as a computer screen or a LCD display. It further comprises a communication means such as a modem for communicating with a wired computer network, namely the internet. When a communication with the internet is established, a software tool for accessing world wide web (www) services, a browser, may be installed on the computer. State of the art browsers include the Netscape Communicator® and the Internet Explorer®, however, it goes without saying that also other browsers are apt to be used in together with the method according to the invention.

The software installed on the user computer further includes a plug-in, i.e. a supplementary program for collaborating with the browser. The plug-in may contain three components:
a) The icon layer 23, a transparent layer atop the browser window
b) The wallet 25, i.e. a counter or a plurality of counters, together with a graphic representation so that the counter score can be displayed in a separate window on the display.
c) A communication module for communicating with the server

The wallet 25 is, in the terminology of this description, a part of the plug-in, however, it does not have to be a real browser plug-in, it may also be configured to work independently from the browser.

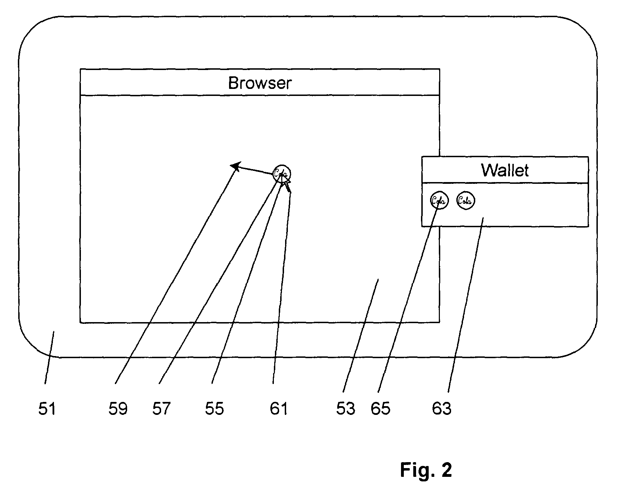

An example of a display of a user computer is shown in **Figure 2.** On a display field of a display means 51, a display area, namely an open browser window 53 is provided. On the browser window 53, an icon 55 appears as a disc shaped object ("coin") which is e.g. labelled with a customer logo 57. The icon serves as an item element, i.e. as a graphic representation of an item. The icon may be freely moving around on the browser window, which movement is indicated by an arrow 59 in the drawing. The screen further contains a pointer symbol 61 belonging to a pointer device ("mouse") which symbol can be moved on the screen by the user. A further window 63 is shown which shows the wallet, i.e. which serves for the graphic presentation of the state of the counter or of one counter unit. The graphic presentation of the wallet may vary in colours, fonts, shape of the window and are adapted to the campaign and to the icons belonging to the campaign. Graphic presentations belonging to different base tags, i.e. to different campaigns are named "skins". In the wallet, the state of a counter unit may be represented by displaying the item number of one campaign (e.g. corresponding to one customer). The wallet may feature a main area, where the item number is represented by a corresponding number of icons 65 in the counter window 63 and a number of controls for registration, personal data, switching between several active campaigns and therefore also its skin and the counter unit it represents, respectively, etc..

The plug-in and especially the wallet may further provide the opportunity for a multiple user operation. Depending on the person using the user computer, the states of different counter units belonging to different campaigns may vary.

In the following, an example of the method according to the invention is described. In Figure 1, some of the steps are denoted by arrows and capitals, which capitals are not to be confused with the letters denoting the method steps of claim 1. As a first step, a possible user may get into contact with a customer campaign on a (customer or other) internet website. There he is provided with the opportunity to subscribe to the campaign and to download the plug-in containing the "wallet", i. e. a counter or a counter unit together with a graphic representation. The plug-in software may be provided on a customer website, however, it may also be directly downloaded from the server, where it is e.g. stored in the customer database 5. Further, graphic elements - icons - and graphic presentations of a wallet - skins - as well as additional data may also be downloaded from the server and especially from the customer database 5 during this initialisation stage. This additional data may contain an entry in a list of customer domains stored in the user computer memory. This entry may serve as key information in a configuration file further comprising the above mentioned downloaded information specific to a campaign such as an icon, a skin, etc.

The creation of items on the server (step A) is carried out upon request of a customer carrying out a campaign (and may be dependent on their paying an item fee to the server provider). A predefined number of items is created, depending on the parameters contained in the customer data base. The item is provided with an individual serial number (individual ID / digital embossing) and is assigned a base tag information. The item information, in addition to the serial number and the base tag, may contain an entire graphic representation, i.e. the icon. It however, may also just contain a reference to an icon information downloaded during initialisation and stored in the user computer memory. Each item is represented in the item stack 6. The item stack 6 is a list of possible items ("active items") which can be sent to a user.

After installation, if the user is connected to the internet via a browser and known software and hardware communication means, the plug-in may contact the server informing it about the possibility to send items to the user (step B). This contacting serves as a request signal. It will generally depend on the webpage the user is linked to. If a wegpage, for which a specific MIME-type has to be set, is called by the users' browser, the plug-in may e.g. be started automatically. This can, e.g., be done by a tag on the "index.html" page of a domain. By this tag, the plug-in is started as soon as a link to the page is established. The request signal then contains preferably the information about this webpage and the campaign linked to it, i.e. the base tag. This contacting further may depend on a set of rules implemented by the plug-in. Such rules may be that the contacting does not take place if the concerned counter unit's item number exceeds a certain value, i.e. the wallet contains more than a certain number of items

During or after step B, further information may be transmitted to the server, such as user data requested by the plug-in upon initialisation. As an example, the information flow from the user to the server further later on includes a continuous transmission of the website URLs of the websites the user is linked to until the user chooses to stop participating and to stop the plug-in program, e.g. by closing a wallet window. This user information may or may not be added to the first database 3.

The item information is transmitted to the user computer (step C). The plug-in creates a graphic element, namely an icon 55 appearing in the browser window of the user, preferably in an animated way. The icon may, for example, move around the browser window. E.g., it moves in a straight line with uniform velocity and is reflected by the window frame. It may further change its appearing such as its colours, a text written on it or even its size. The animation of the icons is based on a series of phases (sprites) which are rendered in quick succession. The representation of the icon is carried out by means of an essentially transparent display layer atop the rendering layer of the browser window. Transparent rendering layers as such are known from image processing. Commercially available image processing computer software such as e.g. the Adobe Photoshop® use this technique in order to display graphic items on top of a given image. Apart from the rendering of the icon, the browser function is not influenced in any way and whatever interaction takes place in any part of the browser window happens independently from the moving icon.

The item provides the user with the opportunity to cause a user induced event, namely, he can "collect" the item. For that purpose, he may move the pointer symbol of a computer mouse on top of the icon. If a confirmation signal ("clicking") coincides in time with the symbol being in a sector defined by the position of the icon, the event is defined to have taken place. Then, a signal is transmitted to the server, according to which the icon has been collected (step D). The event is marked in the server accordingly so there will not be a creation of an item with the same serial number. Also the URL of the website on which the icon appeared may be registered, which registry information is transmitted to the user and/or to the customer database. In this case, creation of a new item with the same user address will be prevented until the user is linked to a new website.

The item information may further contain a time limit information. If the time limit defined in this information has expired without there being a user induced event, the icon is removed from the user display and a signal (no event) is transmitted to the server. An icon with an identical serial number can then be created later on and may e.g. be transmitted to the same user.

The user induced event also activates the wallet (step E). The wallet is a counter together with a graphic representation, the counter having at least one counting unit, wherein each counting unit corresponds to a campaign and is labelled by the basic tag belonging to this campaign. Upon the user induced event, the item number counted in the counter is increased by a certain amount, which may generally be one (simple counting) or a value which is a specific characteristic ("icon value") of the item. The graphic representation is e.g. a window in which the number of collected items may be represented by corresponding graphic symbols. Further, a "skin" belonging to a certain campaign may be contained in the wallet information, which is downloaded during initialisation or may be transmitted after an event.

As soon as the item number of a counter unit has reached a certain value ("the wallet is full" - win situation), this state information is transmitted to the server (step F), where, e.g. in a registry, the user data of users with a full wallet are registered. As an alternative to an automatic transmission of the state data to the server, the user may be asked by a software tool belonging to the plug-in if he intends to cash the prize. Then, before the state information is transmitted, he has to provide personal information such as his postal address, a security code etc. Preferably, as soon as the wallet is full, the skin of the wallet changes its appearance. Further, optical and/or acoustic signals may be generated (possibly related to the customer or his campaign) in order to inform the user of the win-situation. The state information may additionally be entered into the user database.

If a user changes the website domain he is linked to, the plug-in e.g. matches the domain with the list entries of the configuration file. If the domain is present in the list, the wallet skin and other graphic elements may be changed automatically and the user gets the opportunity to receive new items with a base tag representing a campaign of the customer owning the domain. If the domain is not registered in the list, no data transmission to the server is necessary.

The prize information belonging to a campaign may be stored in the customer database and be transmitted upon downloading a wallet. The user may be informed about the prize prior to his starting to collect items. As an alternative, the prize information may also not be transmitted before the win-situation has been registered. A prize may, in addition or as an alternative to direct prizing, contain a chance to win a main prize in a further step, where a certain number of user addresses registered by the registration means is randomly chosen.

In order to even further enhance the interactivity of the method according to the invention, further possibilities may be created. A first possibility is, that the user induced event is - instead of "clicking" an icon - enriched by further interaction with the plug-in software, e.g. a responding to a question of a quiz, the task of sorting the collected items in a certain, pre-defined order or an other task or a combination of a user event with a following different interaction.

Further possibilities also include "physical items". Such physical items are, e.g. coins or detachable labels offered to a customer together with a product related to the campaign (and preferably offered by the customer). Integration of physical items is e.g. carried out as follows:
The physical item has imprinted on it a number which contains one out of a series of serial numbers reserved for physical items. The number further contains a check number. The check number is obtained from the serial number by an non-invertible mathematical function, and is, similar to a PIN code, not obtainable from the serial number. The mathematical function is also implemented in the wallet. The wallet may also contain a special tool, which allows the user to feed both, the serial number and the check number to the computer. The check number is checked by the wallet using the mathematical function. If this check has a positive result, an icon is added (the icon number is increased by one) and a corresponding message containing the icon number is sent to the server.
An other possibility is that instead of providing one central server, parts of the server functions are taken over by other units, e.g. customer website servers. These units are then authorised, e.g. by a central server division, to create a specific number of items. Collected items may or may not be registered by a central server.
Further, instead of providing an item stack 6, the items may only be created upon request by a user computer. As still another alternative, instead of sending items upon a specific request, also a general request can be provided for. Such a general request is merely the transmission of the information that the user computer is connected to the world wide web to the server. The user database 3 in this case contains an individual user address, such as their IP number. The items can then be created, and possibly be put into an item stack, individually addressed for the specific user.
Finally, the method according to the invention does not have to deal with commercial advertisement campaigns, possibly in combination with sweepstakes. It can also be used for other purposes, e.g. for displaying flash news on a transparent display layer of the browser window to subscribed users. As an other example, it may be used for commercial deals, e.g. for exchanging stock or the like. The item information sent to a subscribed user is then an individual offer to buy an object (e.g. a share) which has become available, to a certain price. The user induced event may then be a confirmation of the deal or a confirmation of a principle interest in conducting the deal. A still further example is the exchange of other services, e.g. the opportunity to share a car, to exchange antiques or whatever has a restricted availability and is interesting to subscribed users

## Claims

1. Method of exchanging information between a computer server (1) connected to a computer network and a plurality of users each having a user computer (21) with a processor, memory means, display means and communication means for communicating with a computer network, wherein data is sent from the server to a user, **characterised by** the following series of steps:
a) Providing, on each user computer, means for automatically sending communication signals depending on a computer network connection,
b) Transmitting, from a user computer to the server, a request signal, depending on a network connection being established
c) Transmitting a data item (7) having an individual item ID from the server to the sender of the request signal,
d) Providing, on the display means of the user computer, a transparent display layer,
e) Displaying on said transparent display layer an item element (55) representing the data item and providing the possibility for the user to cause a user induced event.

2. Method according to claim 1, **characterised in that** on the user computer a state data set containing state data is provided, that, if the user induced event has been caused, an event information is entered into the state data set, and that depending on the state data, such state data is transmitted from the user to the server.

3. Method according to claim 1, **characterised in that** if the user induced event has been caused, an event information containing the individual item ID is transmitted to the server.

4. Method according to any one of the preceding claims, **characterised in that** the item information further contains a time limit information containing a time limit, that, if the user induced event has not been caused within the time limit, the item element is removed from the display means and a no-event information containing the individual item ID is transmitted to the server, and that further items having this individual item ID are not created if no such no-event information has been transmitted to the server.

5. Method according to any one of the preceding claims, **characterised in that** on the server an item data set is provided for containing a plurality of individual item IDs and that, if a request signal has been transmitted to the server, an item having an item ID contained in said item data set is transmitted to the sender of the request signal, and this item ID is removed from the item data set.

6. Method according to any one of the preceding claims, **characterised in that** a display area is provided on the user display means and that the graphic representation (55) of the item covers a certain sector of the display area, the sector preferably being moving on the display area, and **in that** the user induced event is a time coincidence of a pointer symbol (61) being positioned onto said sector and of a creation of a confirmation signal by the user.

7. Method according to any one of the preceding claims, **characterised in that** the state data set comprises an item counter having at least one counting unit counting an item number, the item counter further comprising a graphic representation (63) of the item counter and that after the user induced event an item number is increased.

8. Method according to claim 7, **characterised in that** after a user induced event, a further display area is provided on the user computer display means, and that in this display area a graphic representation (63) of the item counter is at least partly displayed.

9. Method according to claim 7 or 8, **characterised in that** each data item contains one base tag, that each counting unit comprises one base tag, so that a correspondence between base tags and counting units is established, that the request signal comprises a base tag of one counting unit of the item counter, that the transmitted item has the base tag of the request signal, and that the item number of the counting unit corresponding to the base tag of the item is increased upon the user induced event.

10. Method according to claim 9, **characterised in that** on the server a first database is provided, containing data of items, including a base tag serving as a key information.

11. Method according to any one of the preceding claims, **characterised in that** the information transmission between server and user computers is carried out using MIME.

12. An information exchange system comprising a computer server and a plurality of users each having a user computer with a processor, memory means, display means, comprising the following elements:
- A computer program installed on the server computer comprising means for maintaining a communication with a plurality of user computers, and means for transmitting, upon receiving a request signal, a data item having an individual item ID to the sender of the request signal,
- on each user computer, a browser, comprising means for generating a display area on the display means of the user computer
- a plug-in computer program for collaboration with the browser, comprising means for displaying an item element referred to by an item information, on an essentially transparent display layer on top of the display area, further comprising means for maintaining a state data set for registering event information if the user has caused a user induced event, and comprising plug-in communication means for transmitting state data to the server and for maintaining a communication with the server.

13. A computer program for being run on a computer connected to a computer network, comprising program code means for implementing a server function, for maintaining a communication with a plurality of user computers, and means for transmitting, upon receiving a request signal, a data item having an individual item ID to the sender of the request signal.

14. A computer for being used as a server, wherein said computer comprises communication means and an operating system, on said computer being installed a computer program according to claim 13

15. A data processing program for being run on a data processing system with an operating system, communication means and display means, connected to a network of data processing systems, on said data processing system a browser being implemented having means for generating a display area on the display means, the data processing program comprising program code means for further implementing a plug-in for collaboration with the browser, comprising means for displaying the item element on an essentially transparent display layer on top of the display area, comprising means for maintaining a state data set for registering event information if the user has caused a user induced event, and comprising plug-in communication means for transmitting state data to the server and for maintaining a communication with the server.
